# EUROPEAN PATENT SPECIFICATION

(11) **EP 3 950 191 B1**
(45) Date of publication and mention of the grant of the patent: **02.07.2025**
(21) Application number: 20776545.4
(22) Date of filing: 25.03.2020
(51) Int. Cl.: B23B 31/00, B23B 31/177

(54) **CHUCK HAVING A DUST-PROOF MECHANISM**
SPANNFUTTER MIT STAUBDICHTEM MECHANISMUS
MANDRIN AVEC MÉCANISME ANTI-POUSSIÈRE

(30) Priority: 27.03.2019 JP 2019061767
(43) Date of publication of application: 09.02.2022
(73) Proprietor: Howa Machinery, Ltd., Kiyosu-shi, Aichi 452-8601 (JP)
(72) Inventor: NAGAOSA, Hiroshi, Kiyosu-shi, Aichi 452-8601 (JP)
(74) Representative: Liesegang, Eva
(86) International application number: PCT/JP2020/013212
(87) International publication number: WO 2020/196582

(56) References cited:
- WO-A1-2009/093563
- WO-A1-2018/092797
- WO-A1-2018/092879
- DE-A1- 3 524 036
- JP-A- 2001 277 012
- JP-A- H09 174 313
- JP-A- H11 235 632
- JP-A- S 578 005
- JP-U- S63 161 645
- US-A- 4 723 778

## Description

### TECHNICAL FIELD

The present invention relates to a chuck having a dust-proof mechanism for preventing the entry of foreign matter into the chuck.

A prior art chuck is known from document WO 2018/092797 A1 which discloses a chuck comprising a dust-proof mechanism for preventing the entry of foreign matter into the chuck, the dust-proof mechanism comprising a fluid supply source, an inner space that is provided in the chuck and through which a supply fluid supplied from the fluid supply source can pass as a pressurized fluid and a discharge clearance that is provided in the chuck and through which the pressurized fluid can be discharged to outside of the chuck from the inner space.

### BACKGROUND ART

Conventionally, a chuck is provided therein with an action mechanism for moving claws of the chuck. There are known dust-proof mechanisms which do not adversely impact the chuck action due to chips, cutting oil, or the like entering the chuck.

For example, there is a known dust-proof mechanism as described in Patent Literature 1. Here, a cover plate and a dust-proof plate are attached on the front surface of a chuck main body. The dust-proof plate is biased outward in a radial direction by a spring member, thereby closing a gap between a base jaw connected to a master jaw and a notch of the cover plate. Moreover, for example, there is a known dust-proof mechanism as described in Patent Literature 2. Here, a center cover is attached on the front surface of a chuck main body, and a high-pressure coolant supplied from a machine tool is jetted outward in a radial direction from the back side of the periphery of the center cover. In this manner, the jetted coolant blows away dust such as chips adhered on the periphery of a jaw. A further chuck is disclosed in JP H11 235632 A.

Patent Literature 1: JP H04-136603 U
Patent Literature 2: WO 2018/092879 A1

However, in Patent Literature 1, when a problem occurs in the spring member, it becomes difficult for the dust-proof plate to close a gap between the base jaw and the notch of the cover plate. In this case, foreign matter such as chips or cutting oil might have possibly entered the inside of the chuck main body through the gap. Moreover, in Patent Literature 2, the high-pressure coolant might have possibly pushed dust such as chips into the gap between the chuck main body and the jaw.

### DISCLOSURE OF THE INVENTION

In view of the above-described problems, the present invention aims at providing a chuck having a dust-proof mechanism capable of preventing the entry of foreign matter into the chuck.

The present invention provides a chuck as defined in independent claim 1.

The present invention is able to prevent the entry of foreign matter into the chuck.

### BRIEF DESCRIPTION OF DRAWINGS

Fig. 1 is a diagram illustrating a chuck provided with a dust-proof mechanism according to an embodiment of the invention.
Fig. 2 is a diagram illustrating a state where a claw is taken out from the chuck of Fig. 1.
Fig. 3 is a diagram viewed from III of Fig. 2, the diagram illustrating a section of the chuck in a state where a drive member was made to advance.
Fig. 4 is a diagram illustrating an enlarged part viewed from IV of Fig. 2.
Fig. 5 is a perspective view illustrating a second sealing member of Fig. 3 in a state where a master jaw and a claw guiding member are omitted.
Fig. 6 is a diagram illustrating a section along a line VI-VI of Fig. 4.
Fig. 7 is a diagram illustrating a state where a drive member was made to retreat.

### DESCRIPTION OF EMBODIMENTS

Embodiments of the present invention will be described below with reference to the drawings. The present embodiment exemplifies a case where the chuck is a chuck to be fixed to a main axis of a machine tool such as an NC lathe.

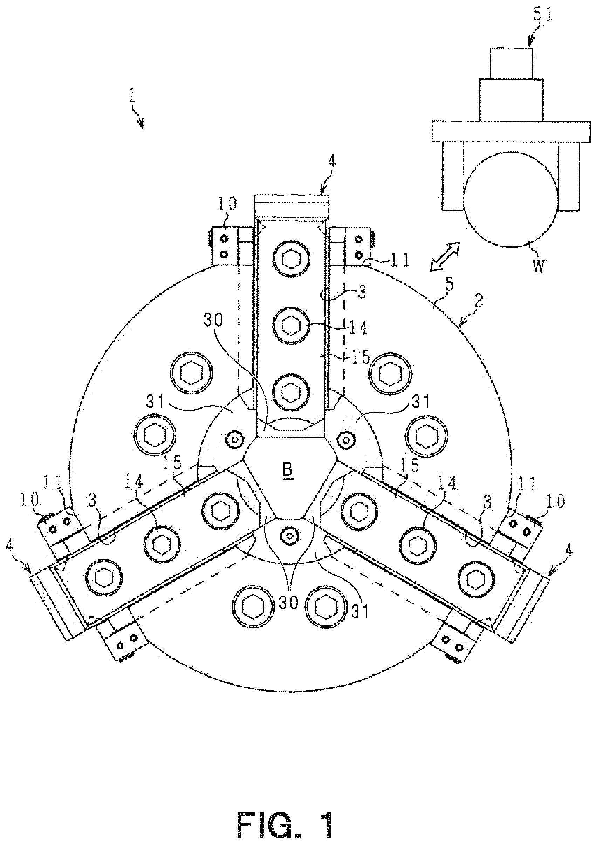

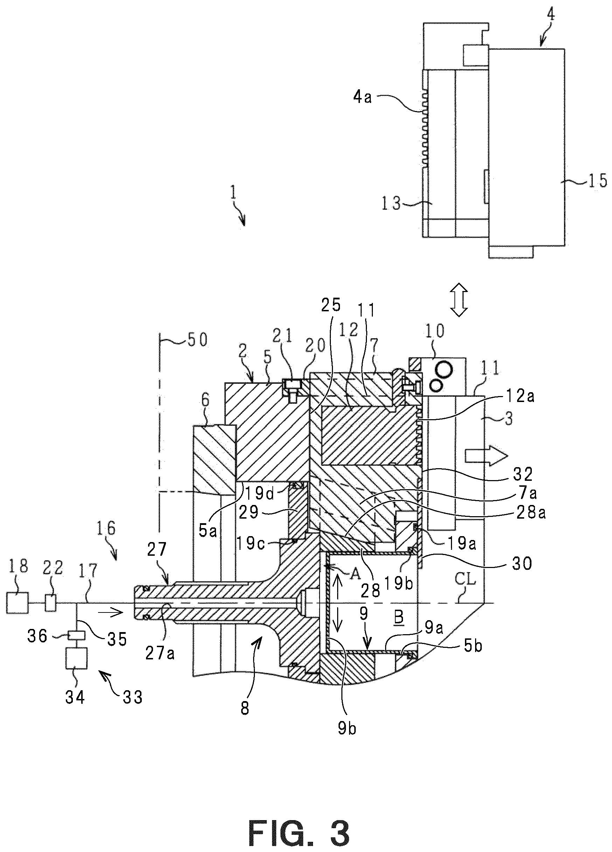

As illustrated in Fig. 1 to Fig. 3, a chuck 1 is fixed to a main axis 50 (Fig. 3) of a machine tool such as an NC lathe. The chuck 1 includes a chuck main body 2, a master jaw 7 provided at the chuck main body 2, and a drive member 8 provided inside the chuck main body 2.

The chuck main body 2 includes attachment grooves 3 extending in a radial direction, so that a work W is clamped by claws 4 attached on the attachment groove 3. The work W is conveyed to the chuck 1 by a loader 51 exemplified as a conveyance device. The work W clamped by the chuck 1 is processed by forward/backward/rightward/leftward movement of a tool rest (not illustrated) with a plurality of cutting tools. The claw 4 is replaced manually or with a claw automatic replacement device (not illustrated) when the diameter of the work W to be processed is changed or wear has occurred due to a long-time use.

The chuck main body 2 includes a front body 5 and a rear body 6 provided on the rear end surface of the front body 5 by a mounting bolt (not illustrated). A plurality of (three, for example) attachment grooves 3 are provided on the front surface of the front body 5. The attachment grooves 3 are arranged in a circumferential direction with the same intervals. Moreover, the front body 5 includes a cylindrical first inner peripheral surface 5a and a cylindrical second inner peripheral surface 5b. The first inner peripheral surface 5a is provided on the rear side, and the second inner peripheral surface 5b is provided on the front side. The diameter of the second inner peripheral surface 5b is smaller than the diameter of the first inner peripheral surface 5a. The front side indicates the side where the claw 4 can be attached, while the rear side indicates the side of the main axis 50 of the machine tool.

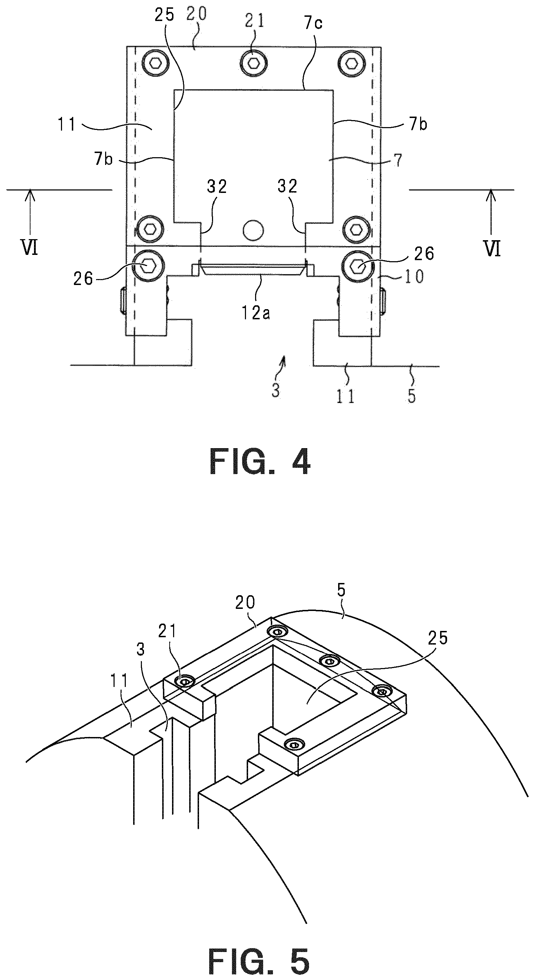

The master jaw 7 is arranged in each guide groove 25 of the front body 5. The guide groove 25 is arranged to correspond to the above-described attachment groove 3, and extends in a radial direction. As illustrated in Fig. 3 and Fig. 4, each guide groove 25 forms a space continuous to the corresponding attachment groove 3. The master jaw 7 is movable in a radial direction in the guide groove 25.

As illustrated in Fig. 3, a connection member 12 is provided in an advanceable and retractable manner in the master jaw 7. The connection member 12 includes a rack-shaped connection part 12a connectable to a connection surface 4a (described later) of the claw 4. The connection member 12 is movable between a connection position connected to the claw 4 and a release position separated from the claw 4. When the connection member 12 is positioned at the connection position, the claw 4 having been guided to the attachment groove 3 and the master jaw 7 are connected. The connection part 12a is engaged with the connection surface 4a.

The claw 4 includes a base jaw 13, and a top jaw 15 fixed on the front surface of the base jaw 13 by a plurality of bolts 14. The base jaw 13 is inserted in the attachment groove 3. The attachment groove 3 is formed in front of the master jaw 7 inserted in the guide groove 25. The connection surface 4a is provided on the rear surface of the base jaw 13.

As illustrated in Fig. 1 to Fig. 4, on the outer peripheral surface of the front body 5 of the chuck main body 2, an attachment surface 11 is formed at a position corresponding to each attachment groove 3 (position on the outer peripheral side of the attachment groove 3). The attachment surface 11 is formed to be flat from the attachment groove 3 across to the guide groove 25, as illustrated in Fig. 4 and Fig. 5. On the attachment surface 11, a claw guiding member 10 is attached by bolts 26, as illustrated in Fig. 4. The claw guiding member 10 is configured to guide, when the claw 4 is replaced manually or by a claw automatic replacement device (not illustrated), the claw 4 to be newly attached to the attachment groove 3 of the chuck main body 2.

As illustrated in Fig. 3, the drive member 8 drives the master jaw 7. The drive member 8 includes a draw screw 27, a wedge plunger 28, and a retainer 29. The draw screw 27, the wedge plunger 28, and the retainer 29 are integrally movable along a center axis line CL.

The draw screw 27 is arranged with the center axis line CL of the chuck main body 2 as a center.

The wedge plunger 28 is attached on the front surface of the draw screw 27. The wedge plunger 28 includes a wedge engagement groove 28a, and a wedge portion 7a of the master jaw 7 is engaged with the wedge engagement groove 28a. In this manner, the draw screw 27 meshes with each master jaw 7 through the wedge plunger 28. The wedge engagement groove 28a is inclined relative to the center axis line CL.

The retainer 29 is interposed between the draw screw 27 and the front body 5. The retainer 29 is arranged between the first inner peripheral surface 5a of the front body 5 and the outer peripheral surface of the draw screw 27. The retainer 29 is attached to the draw screw 27, and is slidable on the first inner peripheral surface 5a of the front body 5. The draw screw 27 is held by a drive guiding member 9 described later through the wedge plunger 28, and held by the front body 5 through the retainer 29.

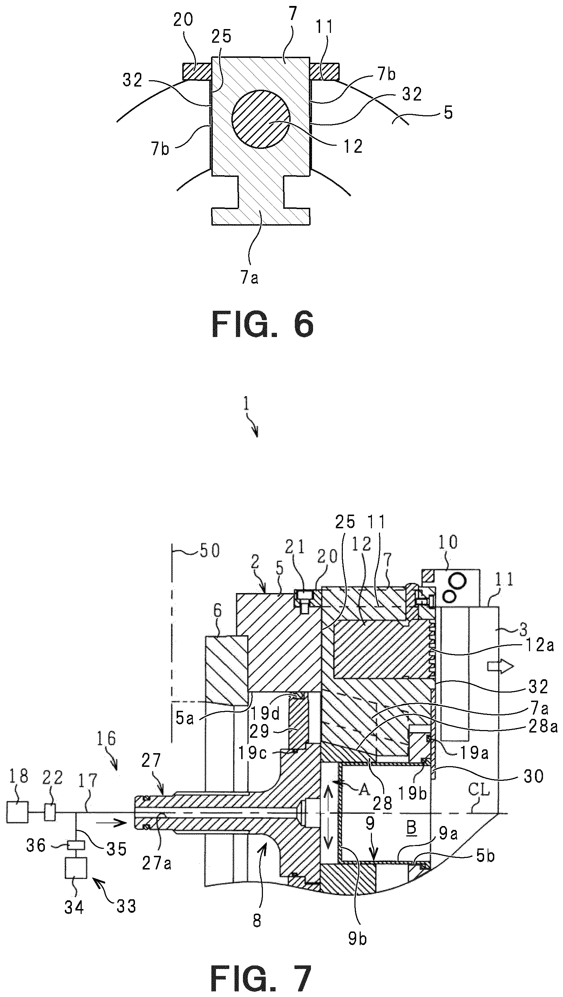

The drive member 8 advances (moves rightward in Fig. 3) or retreats (moves leftward in Fig. 3, see Fig. 7) along the center axis line CL, whereby each master jaw 7 is moved in the radial direction along the guide groove 25. That is, as illustrated in Fig. 3, when the drive member 8 advances, each master jaw 7 moves outward in the radial direction. Meanwhile, as illustrated in Fig. 7, when the drive member 8 is retreated, each master jaw 7 moves inward in the radial direction. In this manner, in a case where the claw 4 is connected to the connection member 12 of the master jaw 7, when the drive member 8 is advanced, the claw 4 can be moved outward in the radial direction, while when the drive member 8 is retreated, the claw 4 can be moved inward in the radial direction.

As illustrated in Fig. 3, the drive guide member 9 (also referred to as a pilot bushing) is provided inside the front body 5. The drive guide member 9 is configured to guide the movement of the drive member 8. To be more specific, the drive guide member 9 includes a cylindrical part 9a, and a rear edge portion 9b provided at the rear end part of the cylindrical part 9a. The cylindrical part 9a is formed concentrically with the center axis line CL. The front edge portion of the cylindrical part 9a is attached on the second inner peripheral surface 5b of the front body 5. The outer peripheral surface of the cylindrical part 9a is a guide surface for guiding the movement of the wedge plunger 28 attached on the drive member 8. The rear edge portion 9b is formed perpendicularly to the center axis line CL, and faces the front surface of the drive member 8. An outer space B is formed inside the cylindrical part 9a. The outer space B is open on the front surface of the chuck main body 2. When the claw 4 clamps the work W, a part of the work W can be inserted in the outer space B.

As illustrated in Fig. 1 to Fig. 3, a first cover member 30 is attached on the front surface of each master jaw 7. The first cover member 30 extends inward in the radial direction from the corresponding master jaw 7 over the cylindrical part 9a of the drive guide member 9. Moreover, a second cover member 31 is attached between the first cover members 30 adjacent to each other in the circumferential direction. The first cover member 30 and the second cover member 31 cover a gap between the end portion on the inner side in the radial direction of the master jaw 7 and the front body 5, and a gap between the front body 5 and the cylindrical part 9a of the drive guide member 9. This prevents therefore the entry of foreign matter such as chips and cutting oil into these gaps. The above-described outer space B is open on the inner side in the radial direction of the first cover member 30 and the second cover member 31.

The chuck 1 of the present embodiment includes a dust-proof mechanism 16 for preventing the entry of foreign matter, such as chips and cutting oil generated in processing or the like of the work W, into the chuck 1. The dust-proof mechanism 16 is configured to supply a supply fluid to an inner space A formed by the front body 5, the drive member 8, and the like, through the drive member 8 operating the chuck 1, and pressurize the supply fluid in the inner space A. Moreover, the dust-proof mechanism 16 is configured to supply a pressurized fluid in the inner space A to a discharge clearance 32 described later of the chuck main body 2, and discharge the pressurized fluid to the outside of the chuck main body 2 through the discharge clearance 32.

To be more specific, the dust-proof mechanism 16 of the present embodiment includes an air supply source 18 exemplified as a fluid supply source, the inner space A provided inside the chuck 1, and the discharge clearance 32 provided in the chuck 1.

The air supply source 18 supplies supply air, as an example of the supply fluid, to the discharge clearance 32. The air supply source 18 may be configured to feed air, as supply air, into the inner space A. Note that the supply fluid is not limited to air, and may be gas or liquid having good handleability other than air.

The inner space A is connected to the air supply source 18, and pressurizes supply air supplied from the air supply source 18. The inner space A includes a space defined by the front body 5, the master jaw 7, the drive member 8, and the drive guide member 9. The inner space A is used as a term indicating a space formed among parts adjacent to one another in the chuck 1. In the present embodiment, the inner space A has a configuration in which a plurality of spaces including very small gaps are communicated to form a flow path where air passes. In the inner space A, the volume of space defined between the front surface of the drive member 8 and the rear edge portion 9b of the drive guide member 9 is larger when the drive member 8 is retreated as illustrated in Fig. 7, than when the drive member 8 is advanced as illustrated in Fig. 3.

The air supply source 18 and the inner space A are communicated through a penetrating flow path 27a. The penetrating flow path 27a penetrates the draw screw 27 of the drive member 8. The penetrating flow path 27a may extend along the center axis line CL. The penetrating flow path 27a is open on the front surface of the draw screw 27, and communicates to the inner space A.

One end of a supply pipe 17 is connected to the penetrating flow path 27a. The air supply source 18 is connected to the other end of the supply pipe 17. Supply air from the air supply source 18 is supplied to the inner space A of the chuck main body 2 through the supply pipe 17 and the penetrating flow path 27a.

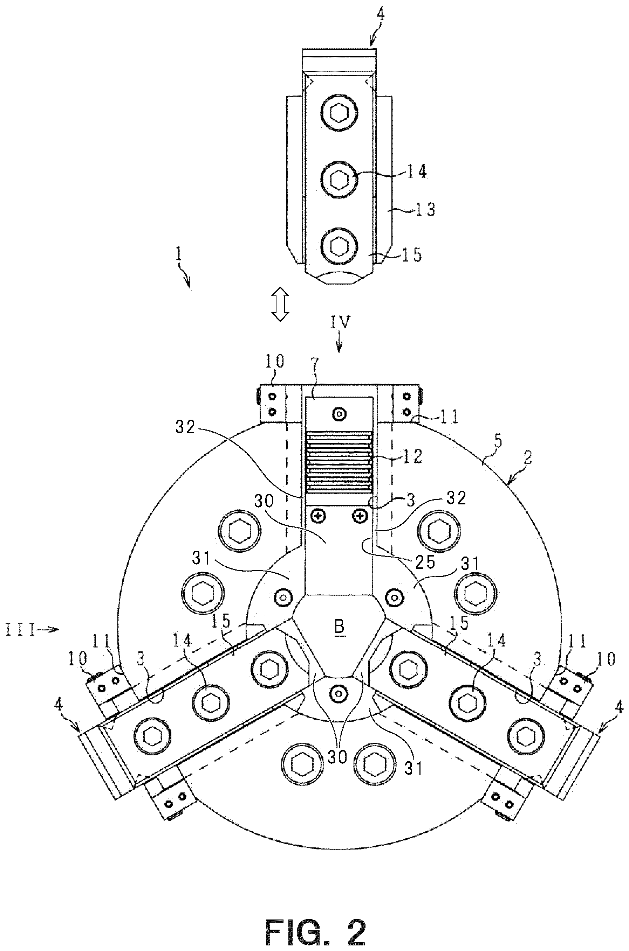

The discharge clearance 32 is a gap for discharging pressurized air to the outside of the chuck main body from the inner space A. The discharge clearance 32 may be a gap between the guide groove 25 provided in the front body 5 and extending in the radial direction, and the master jaw 7 inserted in the guide groove 25. To be more specific, the discharge clearance 32 may be a gap open on the front surface of the chuck main body 2 (the surface on the side where claw 4 is attached), in the gap between the guide groove 25 and the side surface 7b (see Fig. 4 and Fig. 6) of the master jaw 7, as illustrated in Fig. 2 to Fig. 4. The discharge clearance 32 is communicated to the attachment groove 3 where the claw 4 is attached. Thus, in a case where the claw 4 is attached to the attachment groove 3, pressurized air is discharged to the outside of the chuck main body 2 from the discharge clearance 32 through a gap between the claw 4 and the attachment groove 3.

As illustrated in Fig. 3, in order to discharge pressurized air to the outside from the discharge clearance 32, the dust-proof mechanism 16 may include the first sealing members 19a to 19d provided in the gap other than the discharge clearance 32 in the gap provided in the chuck main body 2. The first sealing members 19a to 19d may be provided in a plurality of gaps of the chuck 1. For example, the first sealing member 19a may be provided in a gap between the front body 5 and the first cover member 30. The first sealing member 19b may be provided in a gap between the front body 5 and the cylindrical part 9a of the drive guide member 9. The first sealing member 19c may be provided in a gap between the draw screw 27 and the retainer 29, and the first sealing member 19d may be provided in a gap between the retainer 29 and the front body 5. The first sealing members 19a to 19d may be O-rings made of an elastic material such as rubber, for example.

Moreover, in order to discharge pressurized air to the outside from the discharge clearance 32, the dust-proof mechanism 16 includes a second sealing member 20 covering a gap between the master jaw 7 and the guide groove 25 from the outside in the radial direction, as illustrated in Fig. 3 to Fig. 6. The master jaw 7 projects further upward than the second sealing member 20. As illustrated in Fig. 6, the second sealing member 20 is in contact with the attachment surface 11 formed on the outer peripheral surface of the front body 5, and is in contact with the side surface 7b and the rear surface 7c of the master jaw 7. In this manner, a gap between the master jaw 7 and the guide groove 25 is covered from the outside in the radial direction, and sealed. As illustrated in Fig. 4 and Fig. 5, the second sealing member 20 is formed to partially surround the periphery of the master jaw 7, when viewed from the outside in the radial direction. To be more specific, the second sealing member 20 is in contact with both side surfaces 7b and the rear surface 7c of the master jaw 7, and is formed in a rectangular frame shape with a partial notch. In this manner, the second sealing member 20 covers a gap between both side surfaces 7b and the rear surface 7c of the master jaw 7 and the guide groove 25, from the outside in the radial direction.

As illustrated in Fig. 4 and Fig. 5, the second sealing member 20 may be fixed to the attachment surface 11 by a plurality of bolt members 21. The second sealing member 20 may be made of an elastic material such as rubber, for example. Alternatively, the second sealing member 20 may be made of a resin material harder than the elastic material such as rubber. In this case, a layer of an elastic material such as rubber may be formed on the contact surface with the master jaw 7 and the contact surface with the attachment surface 11 in the second sealing member 20.

As illustrated in Fig. 3, the dust-proof mechanism 16 may include a flow regulating valve 22 exemplified as a supply amount adjusting part. The flow regulating valve 22 may be attached to the supply pipe 17 to be capable of adjusting a supply amount of supply air to be supplied from the air supply source 18 to the inner space A. The flow regulating valve 22 adjusts a discharge amount of pressurized air to be discharged from the clearance of the chuck main body 2. The flow regulating valve 22 may be controlled by a control device (not illustrated) when the claw 4 is replaced by a claw automatic replacement device. Alternatively, the flow regulating valve 22 may be operated manually when the claw 4 is replaced manually.

Moreover, the dust-proof mechanism 16 may further include a mixing part 33 where a lubricant is mixed into supply air. If pressurized air is continuously discharged to the outside from the inner space A, the lubricant preliminarily applied on the parts configuring the chuck 1 may be removed, thereby influencing the action of the chuck 1. Thus, the dust-proof mechanism 16 may be configured so that a lubricant can be mixed to supply air supplied from the air supply source 18. To be more specific, the mixing part 33 may include a lubricant supply pump 34 that supplies a lubricant (lubricating oil, for example) to the supply pipe 17, and a mixing pipe 35 that connects the lubricant supply pump 34 and the supply pipe 17. In this manner, a lubricant stored in a lubricant storing part not illustrated is supplied to the supply pipe 17 by the lubricant supply pump 34, and mixed into supply air in the form of a mist. The supply air to which a lubricant is mixed is supplied to the inner space A, and pressurized.

A distributing valve 36 exemplified as a mixing amount adjusting part may be attached to the mixing pipe 35. The distributing valve 36 adjusts a mixing amount of a lubricant to be mixed into supply air to be supplied to the inner space A of the chuck 1. The distributing valve 36 may be controlled by a control device (not illustrated) when the claw 4 is replaced by a claw automatic replacement device. Alternatively, the distributing valve 36 may be operated manually when the claw 4 is replaced manually.

In this manner, according to the present embodiment, supply air supplied to the inner space A from the air supply source 18 is pressurized, and the pressurized air in the inner space A passes the discharge clearance 32 to be discharged to the outside of the chuck 1 from the inner space A. In this manner, it is possible to prevent foreign matter such as chips and lubricant from passing the discharge clearance 32 and entering the inside of the chuck 1 from the outside. In this case, it is possible to prevent the entered foreign matter from hindering the movement of movable parts such as the master jaw 7 and the drive member 8 in the chuck 1. Moreover, the pressurized air is discharged to the outside from the inner space A through the discharge clearance 32, which enables simplification of the configuration of the air supply flow path. In this manner, it is possible to prevent the entry of foreign matter with a simple configuration.

Moreover, according to the present embodiment, the penetrating flow path 27a for connecting the air supply source 18 and the inner space A penetrates the draw screw 27 of the drive member 8 driving the master jaw 7. This enables simplification of the configuration of the air supply flow path. Especially, according to the present embodiment, the penetrating flow path 27a extends along the center axis line CL. In this manner, it is possible to equally supply pressurized air to the discharge clearance 32 defined by each of the master jaws 7 arranged at different positions in the circumferential direction. Moreover, it is possible to prevent the deterioration of rotation balance of the chuck 1 and reduce the vibration generated by the rotation.

Moreover, according to the present embodiment, the first sealing members 19a to 19d are provided in the gaps other than the discharge clearance 32 of the chuck 1. In this manner, it is possible to seal the gaps other than the discharge clearance 32 by the first sealing members 19a to 19d, and prevent discharge of pressurized air to the outside through these gaps. Therefore, pressurized air can be supplied to the discharge clearance 32 in a concentrated manner, which increases a discharge amount (or a discharge speed) of pressurized air from the discharge clearance 32. As a result of the above, it is possible to further prevent foreign matter from passing the discharge clearance 32 and entering the inside of the chuck 1 from the outside.

Moreover, according to the present embodiment, the discharge clearance 32 is a gap between the guide groove 25 provided in the chuck main body 2 and extending in the radial direction, and the master jaw 7 inserted in the guide groove 25. The work W is attached to the front surface of the chuck 1 by the claws 4, and is subjected to processing. In this manner, pressurized air is discharged from the clearance existing on the side close to the work W, which effectively prevents the entry of foreign matter such as chips and lubricant into the clearance.

Moreover, according to the present embodiment, the discharge clearance 32 is a gap open on the front surface of the chuck 1 in the gap between the guide groove 25 and the master jaw 7. In this manner, pressurized air is discharged from the discharge clearance 32 open on the front surface of the chuck 1, which further prevents the entry of foreign matter such as chips and lubricant into the discharge clearance 32.

Moreover, according to the present embodiment, the second sealing member 20 covers the gap between each of the master jaw 7 and the corresponding guide groove 25 from the outside in the radial direction. In this manner, the second sealing member 20 can seal a corresponding part open on the outer peripheral surface of the chuck main body 2 in the gap between the master jaw 7 and the guide groove 25, which prevents discharge of pressurized air to the outside from the respective part. Therefore, it is possible to supply pressurized air in a concentrated manner to the discharge clearance 32 open on the front surface of the chuck 1 in the gap between the guide groove 25 and the master jaw 7, and thus increase a discharge amount of pressurized air from the discharge clearance 32. As a result, it is possible to further prevent foreign matter from passing the discharge clearance 32 and entering the inside of the chuck 1 from the outside.

Moreover, according to the present embodiment, the flow regulating valve 22 adjusts a supply amount of supply air to be supplied to the inner space A from the air supply source 18. In this manner, it is possible to change a discharge amount of pressurized air from the discharge clearance 32, when the claw 4 of the chuck 1 is replaced, when the work W is processed, or when the chuck 1 is in a standby state. Therefore, pressured air can be discharged efficiently. For example, when the probability that foreign matter enters is high, the discharge amount of pressurized air can be increased, thereby effectively preventing the entry of foreign matter. For example, the discharge amount of pressurized air is increased when the claw 4 is replaced, whereby the pressurized air can blow away foreign matter such as chips and lubricant adhering to the newly-attached claw 4. Therefore, it is possible to further prevent the entry of foreign matter into the discharge clearance 32. When the claw 4 is replaced, the discharge amount of pressurized air may be increased as compared with when the work W is processed, and in that case, it is possible to further prevent the entry of foreign matter. When the work W is processed, foreign matter such as chips and lubricant are generated in front of the chuck 1. Thus, the discharge amount of pressurized air is increased, thereby further preventing the entry of foreign matter into the discharge clearance 32. Meanwhile, when the chuck 1 is in the standby state, the probability that foreign matter enters is low. Thus, the discharge amount of pressurized air can be reduced, which reduces the amount of air used.

Moreover, according to the present embodiment, a lubricant is mixed into supply air. In this manner, it is possible to supply the supply air in which a lubricant is mixed, to the inner space A. Therefore, a lubricant can be adhered on a part where the lubricant was removed by pressurized air. This enables therefore smooth movement of movable parts such as the master jaw 7 and the drive member 8 in the chuck 1.

Furthermore, according to the present embodiment, the distributing valve 36 adjusts a mixing amount of a lubricant to be mixed into supply air. In this manner, the lubricant can be adhered efficiently. For example, in a case where the discharge amount of pressurized air is increased when the claw 4 is replaced or when the work W is processed, it is considered that the probability that the lubricant is removed by pressurized air is high. In this case, the mixing amount of a lubricant is increased, whereby it is possible to efficiently adhere the lubricant to each of the parts. Meanwhile, in a case where the discharge amount of pressurized air is reduced when the chuck 1 is in the standby state, it is considered that the probability that the lubricant is removed by pressurized air is low. In this case, the mixing amount of a lubricant is reduced, whereby it is possible to reduce the amount of the lubricant used.

The present invention is not limited to the above-described embodiment, and can be implemented by appropriately changing a part of the configurations within a range not departing from the scope of the invention.

## Claims

1. A chuck (1) comprising:
a dust-proof mechanism (16) for preventing the entry of foreign matter into the chuck (1),
the dust-proof mechanism (16) comprising:
a fluid supply source (18);
an inner space (A) that is provided in the chuck (1) and through which a supply fluid supplied from the fluid supply source (18) can pass as a pressurized fluid;
a discharge clearance (32) that is provided in the chuck (1) and through which the pressurized fluid can be discharged to outside of the chuck (1) from the inner space (A);
wherein the discharge clearance (32) is a gap between a guide groove (25) provided in a chuck main body (2) of the chuck (1), which groove (25) extends in a radial direction, and a master jaw (7) inserted in the guide groove (25); wherein the gap is open on a surface of a side where a claw (4) is attached, in the gap between the guide groove (25) and the master jaw (7);
the said dust-proof mechanism (16) further comprising
a second sealing member (20) that covers the gap between the master jaw (7) and the guide groove (25) from outside in the radial direction.

2. The chuck (1) according to claim 1, further comprising a penetrating flow path (27a) that connects the fluid supply source (18) and the inner space (A) and penetrates a drive member (8) driving the master jaw (7) of the chuck (1).

3. The chuck (1) according to claim 2, wherein the penetrating flow path (27a) extends along a center axis line (CL) of the chuck (1).

4. The chuck (1) according to any one of claims 1 to 3, further comprising a first sealing member (19a to 19d) provided in a gap other than the discharge clearance (32) of the chuck (1).

5. The chuck (1) according to any one of the preceding claims, further comprising a supply amount adjusting part (22) that adjusts a supply amount of the supply fluid.

6. The chuck (1) according to any one of the preceding claims, further comprising a mixing part (32) where a lubricant is mixed into the supply fluid.

7. The chuck (1) according to claim 6, wherein the mixing part (32) includes a mixing amount adjusting part (36) that adjusts a mixing amount of a lubricant mixed into the supply fluid.

## Patentansprüche

1. Spannfutter (1), umfassend:
einen Staubschutzmechanismus (16) zur Verhinderung des Eindringens von Fremdkörpern in das Spannfutter (1), wobei
der Staubschutzmechanismus (16) umfasst:
eine Fluidversorgungsquelle (18);
einen Innenraum (A), der im Spannfutter (1) vorgesehen ist und durch den ein von der Fluidversorgungsquelle (18) zugeführtes Fluid unter Druck nach außen strömen kann;
einen Auslassspalt (32), der im Spannfutter (1) vorgesehen ist und durch den das unter Druck stehende Fluid aus dem Innenraum (A) nach außen abgeführt werden kann;
wobei der Auslassspalt (32) ein Spalt zwischen einer radial verlaufenden Führungsnut (25), die im Spannfutterkörper (2) des Spannfutters (1) vorgesehen ist, und einer in die Führungsnut (25) eingesetzten Hauptbacke (7) ist; wobei der Spalt an einer Seitenoberfläche, an der eine Klaue (4) befestigt ist, in dem Spalt zwischen der Führungsnut (25) und der Hauptbacke (7) offen ist; wobei
der Staubschutzmechanismus (16) außerdem ein zweites Dichtungselement (20) umfasst, das den Spalt zwischen der Hauptbacke (7) und der Führungsnut (25) in der radialen Richtung von außen abdeckt.

2. Spannfutter (1) nach Anspruch 1, das außerdem einen durchdringenden Strömungskanal (27a) umfasst, der die Fluidquelle (18) mit dem Innenraum (A) verbindet und ein Antriebselement (8) durchdringt, das die Hauptbacke (7) des Spannfutters (1) antreibt.

3. Spannfutter (1) nach Anspruch 2, wobei der durchdringende Strömungskanal (27a) sich entlang einer Mittelachse (CL) des Spannfutters (1) erstreckt.

4. Spannfutter (1) nach einem der Ansprüche 1 bis 3, das außerdem ein erstes Dichtungselement (19a bis 19d) umfasst, das in einem anderen Spalt als dem Auslassspalt (32) des Spannfutters (1) angeordnet ist.

5. Spannfutter (1) nach einem der vorhergehenden Ansprüche, das außerdem ein Fördermengen-Einstellteil (22) umfasst, das eine Fördermenge der Förderflüssigkeit einstellt.

6. Spannfutter (1) nach einem der vorhergehenden Ansprüche, das außerdem ein Mischteil (32) umfasst, an dem ein Schmiermittel in die Förderflüssigkeit eingemischt wird.

7. Spannfutter (1) nach Anspruch 6, wobei das Mischteil (32) ein Mischmengen-Einstellteil (36) umfasst, das die Mischmenge eines in die Förderflüssigkeit eingemischten Schmiermittels einstellt.

## Revendications

1. Mandrin (1) comprenant :
un mécanisme anti-poussière (16) pour empêcher l'entrée des corps étrangers dans le mandrin (1),
le mécanisme anti-poussière (16) comprenant :
une source d'alimentation en fluide (18) ;
un espace interne (A) qui est prévu dans le mandrin (1) et à travers lequel un fluide d'alimentation fourni par la source d'alimentation en fluide (18) peut passer sous forme de fluide sous pression ;
un dégagement de décharge (32) qui est prévu dans le mandrin (1) et par le biais duquel le fluide sous pression peut être déchargé à l'extérieur du mandrin (1) par l'espace interne (A) ;
dans lequel le dégagement de décharge (32) est un interstice entre une rainure de guidage (25) prévue dans un corps principal de mandrin (2) du mandrin (1), laquelle rainure (25) s'étend dans une direction radiale, et une mâchoire principale (7) insérée dans la rainure de guidage (25) ; dans lequel l'interstice est ouvert sur une surface d'un côté où est fixée une griffe (4), dans l'interstice entre la rainure de guidage (25) et la mâchoire principale (7) ;
ledit mécanisme anti-poussière (16) comprenant en outre un second élément de scellement (20) qui recouvre l'interstice entre la mâchoire principale (7) et la rainure de guidage (25) depuis l'extérieur dans la direction radiale.

2. Mandrin (1) selon la revendication 1, comprenant en outre un chemin d'écoulement pénétrant (27a) qui raccorde la source d'alimentation en fluide (18) et l'espace interne (A) et pénètre dans un élément d'entraînement (8) entraînant la mâchoire principale (7) du mandrin (1).

3. Mandrin (1) selon la revendication 2, dans lequel le chemin d'écoulement pénétrant (27a) s'étend le long d'une ligne axiale centrale (CL) du mandrin (1).

4. Mandrin (1) selon l'une quelconque des revendications 1 à 3, comprenant en outre un premier élément de scellement (19a à 19d) prévu dans un interstice différent du dégagement de décharge (32) du mandrin (1).

5. Mandrin (1) selon l'une quelconque des revendications précédentes, comprenant en outre une partie de réglage de quantité d'alimentation (22) qui règle une quantité d'alimentation du fluide d'alimentation.

6. Mandrin (1) selon l'une quelconque des revendications précédentes, comprenant en outre une partie de mélange (32) dans laquelle un lubrifiant est mélangé dans le fluide d'alimentation.

7. Mandrin (1) selon la revendication 6, dans lequel la partie de mélange (32) comprend une partie de réglage de quantité de mélange (36) qui règle une quantité de mélange d'un lubrifiant mélangé dans le fluide d'alimentation.
